# EUROPEAN PATENT SPECIFICATION

(11) **EP 2 224 341 B1**
(45) Date of publication and mention of the grant of the patent: **20.03.2013**
(21) Application number: 08864266.5
(22) Date of filing: 29.10.2008
(51) Int. Cl.: G06F 11/20

(54) **NODE SYSTEM, SERVER SWITCHING METHOD, SERVER DEVICE, AND DATA TRANSFER METHOD**
KNOTENSYSTEM, SERVERUMSCHALTUNGSVERFAHREN, SERVERGERÄT UND DATENÜBERTRAGUNGSVERFAHREN
SYSTÈME DE NOEUD, PROCÉDÉ DE COMMUTATION DE SERVEUR, DISPOSITIF DE SERVEUR, ET PROCÉDÉ DE TRANSFERT DE DONNÉES

(30) Priority: 21.12.2007 JP 2007330060
(43) Date of publication of application: 01.09.2010
(73) Proprietor: NEC Corporation, Minato-ku Tokyo 108-8001 (JP)
(72) Inventor: ZEMBUTSU, Hajime, Tokyo 108-8001 (JP)
(74) Representative: Glawe, Delfs, Moll
(86) International application number: PCT/JP2008/069589
(87) International publication number: WO 2009/081657

(56) References cited:
- JP-A- 9 081 409
- JP-A- 2005 250 840
- JP-A- 2007 011 888
- JP-A- 2007 287 183
- US-A1- 2003 051 187

## Description

### TECHNICAL FIELD

The present invention relates to technologies for providing redundancy using a plurality of servers.

### BACKGROUND ART

For improving reliability, some systems or apparatuses combine a plurality of servers to provide a redundant configuration (see JP2001-43105A). For example, in some communication system, a node is comprised of a plurality of servers. General redundant configurations include, for example, duplex, N-multiplex, and (N+1)-redundancy. Additionally, there is a system (hot standby) which synchronizes data between an active server and a standby server at all times such that the standby server can take over a service when the active server fails.

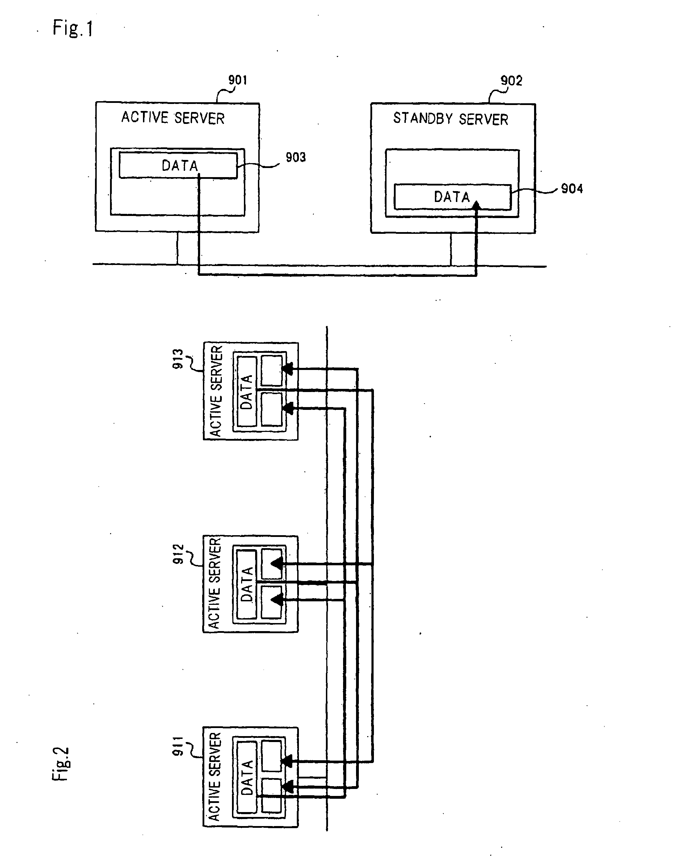

For example, in a duplex configuration with hot standby shown in Fig. 1, standby server 902 supports active server 901 in a one-to-one relationship. Then, during a normal operation where the active server does not fail, active server 901 and standby server 902 synchronize data required to continue a service. Arrows in the figure represent the synchronization of data. In Fig. 1, data 903 of active server 901 is synchronized with data 904 of standby server 902. In this way, standby server 902 is maintained to be able to continue a service of active server 901. Accordingly, the service can be continued by standby server 902 even if active server 901 fails.

Also, in an N-multiplex configuration with hot standby shown in Fig. 2, all servers act as active servers. During a normal operation, data required to continue a service of each active server is distributed to other active servers to mutually synchronize data among a plurality of active servers. In this way, a service can be continued by another active server when any active server fails.

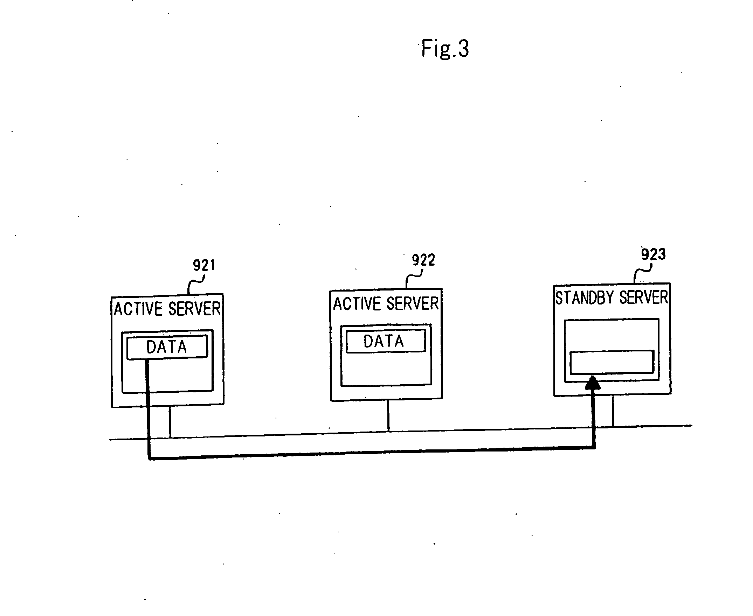

Further, in an (N+1) redundant configuration of cold standby shown in Fig. 3, one standby server 923 is assigned to a plurality of active servers 921, 922. When an active server fails, standby server 923 starts a service in place of that active server.

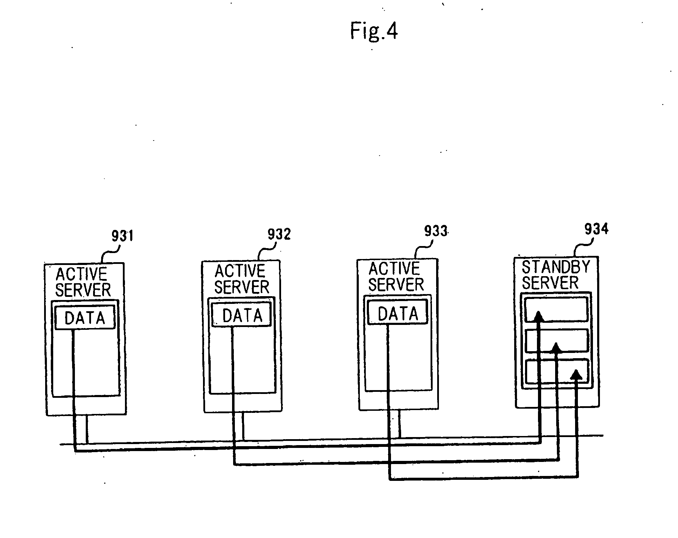

Further, in an (N+1) redundant configuration with hot standby shown in Fig. 4, one hot standby server 934 is assigned to a plurality of active servers 931 - 933. In this respect, the configuration of Fig. 4 is the same as the configuration of Fig. 3. However, in the configuration of Fig. 4, data is synchronized among the active servers and the standby server during a normal operation. In this way, a service can be continued by standby server 934 when any of active servers 931-933 fails.

JP 2007 287183 A discloses a system with a plurality of application servers connected in parallel with a plurality of backup servers wherein, when an application server error occurs, a backup server directly connected immediately substitutes the erroneous application server and, at the same time, another backup server connected with this backup server is substituted for the original backup server.

US 2003/051187 A discloses failover method and system provided for a computer system having at least three nodes operating as a cluster. One method includes the steps of detecting failure of one node, determining the weight of at least two surviving nodes, and assigning a failover node based on the determined weights of the surviving nodes. Another method includes the steps detecting failure of one node and determining the time of failure, and assigning a failover node based in part on the determined time of failure. This method may also include the steps of determining a time period during which nodes in the cluster are heavily utilized, and assigning a failover node that is not heavily utilized during that time period.

### DISCLOSURE OF THE INVENTION

The duplex configuration shown in Fig. 1 requires a number of servers twice as many as active servers which operate during a normal operation. Thus, a high cost is involved in view of the relationship between processing capabilities and cost. If servers are additionally installed in an attempt to scale out a node, two servers must be added for each node, which also constitutes a factor of high cost.

With the employment of the N-multiplex configuration shown in Fig. 2, the cost is reduced taking into consideration the relationship between processing capabilities and cost, as compared with the configuration of Fig. 1. However, if any active server fails, a communication path must be divided to reach a plurality of servers which take over services, where a complicated operation is entailed for taking such an action.

The (N+1) redundant configuration of cold standby shown in Fig. 3 requires a lower cost than the configuration of Fig. 1, and does not require an operation for dividing a communication path as shown in Fig. 2. Also, the configuration of Fig. 3 does not require processing for synchronizing data. However, data is not synchronized between the active servers and the standby server, so that when the standby server starts operating in place of a failed active server, the standby server fails to continue a service which has been so far provided by the active server.

There is also a system which employs a configuration similar to that of Fig. 3, and permits a standby server to start a service after synchronization data is transferred from a failed active server to the standby server. However, in this event, since a large amount of synchronization data must be transferred at one time, an expensive server that contains a special interface capable of high-speed data transfer is required in order to switch servers at high speeds.

In the (N+1) redundant configuration with hot standby shown in Fig. 4, the standby server can continue a service of an active server when it starts operating. However, since single standby server 934 is charged with the synchronization of data with N active servers 931 - 933, an increase in the number N of active servers would require standby server 934 to provide large resources. Servers of the same performance are generally employed for active servers 931 - 933 and standby server 934, but such a way of employment would result in over-specification of the active servers, and increase the cost at the time of switching.

It is an object of the present invention, which is defined in detail in the appended independent claims 1 and 6, to provide technologies which enable a service to be continued at low cost in a redundant configuration comprised of a plurality of servers, without requiring complicated operations such as dividing a communication path.

To achieve the above object, a node system according to the present invention comprises:
a plurality of active servers connected in cascade such that data synchronized to data of a preceding server is stored in a subsequent server; and
a standby server that stores data synchronized to data of the last one of the plurality of active servers in the cascade connection,
wherein, upon occurrence of a failure in any active server, each server from a server subsequent to the failed active server through the standby server takes over a service so far provided by the preceding server using data synchronized to the respective preceding server.

A server switching method according to the present invention comprises:
storing data synchronized to data of a preceding active server in a subsequent active server such that a plurality of active servers are connected in cascade, and storing data synchronized to data at a last one of the plurality of active servers in the cascade connection in a standby server,
wherein, upon occurrence of a failure in any active server, each server from a server subsequent to the failed active server through the standby server takes over a service so far provided by the preceding server using data synchronized to the respective preceding server.

### BRIEF DESCRIPTION OF THE DRAWINGS

[Fig. 1]
   A diagram for describing a duplex configuration with hot standby.
[Fig. 2]
   A diagram for describing an N-multiplex configuration with hot standby.
[Fig. 3]
   A diagram for describing (N+1) redundant configuration of cold standby.
[Fig. 4]
   A diagram for describing (N+1) redundant configuration with hot standby.
[Fig. 5]
   A block diagram showing the configuration of a node in a first exemplary embodiment.
[Fig. 6]
   A flow chart showing the operation of the server when a preceding active server fails in the server of the first exemplary embodiment.
[Fig. 7]
   A flow chart showing the operation of the server when it receives an inter-server switching request from the preceding active server in the server of the first exemplary embodiment.
[Fig. 8]
   A block diagram showing the configuration of a node in a second exemplary embodiment.
[Fig. 9]
   A block diagram showing the configuration of a node in a third exemplary embodiment.

### BEST MODE FOR CARRYING OUT THE INVENTION

Exemplary embodiments of the present invention will be described in detail with reference to the drawings.

### (First Exemplary Embodiment)

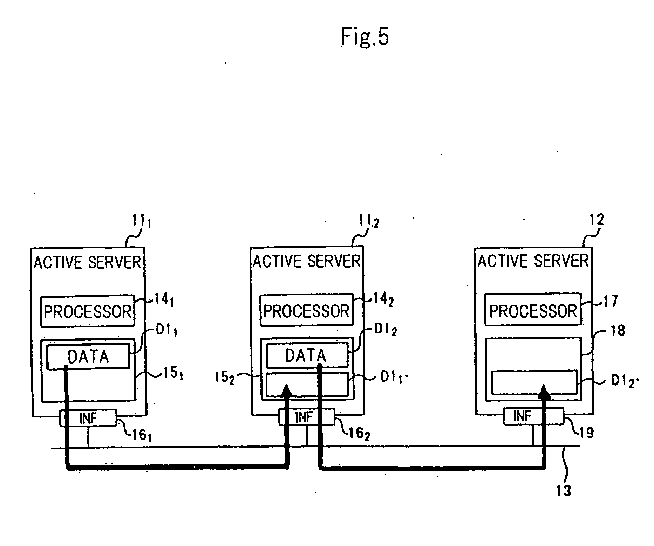

Fig. 5 is a block diagram showing the configuration of a node in a first exemplary embodiment. The node of this exemplary embodiment comprises active servers 11₁, 11₂ and standby server 12. Active servers 11₁, 11₂ and standby server 12 are connected to communication path 13.

During a normal operation, active servers 11₁, 11₂ provide services using their own data D1₁, D1₂, and synchronize their own data to the other servers. In this way, the node is maintained in a state where services of active servers 11₁, 11₂ can be continued by another server. Another server refers to either the other active server or the standby server. In the synchronization of data, a mutual relationship of active servers 11₁, 11₂ is implemented by a cascade connection. Last active server 11₂ in the cascade connection synchronizes its own data D1₂ to standby server 12 cascade connected at the next stage as data D1₂'.

As any active server fails, a server subsequent to this active server continues a service using data synchronized with the failed active server. In this event, the second subsequent server continues a service so far provided by the active server which provides the service using the data synchronized with the preceding active server.

Standby server 12 continues a service using data D1₂' synchronized with preceding active server 11₂ when preceding active server 11₂ fails or when active server 11₂ starts a service in place of second preceding active server 11₁.

In the example of Fig. 5, when active server 11₁ fails, active server 11₂ continues a service using data D1₁' synchronized with active server 11₁. Then, the service provided by active server 11₂ is continued by standby server 12.

In this exemplary embodiment, a plurality of active servers 11₁, 11₂ and standby server 12 are cascade connected such that data of a preceding active server is synchronized to a subsequent active server, and data of the last active server is synchronized to the standby server. When any active server fails, servers subsequent thereto continue services of preceding servers using data synchronized from the preceding servers.

In this way, in the configuration which comprises one standby server for a plurality of active servers, both active servers and standby server are utilized for the synchronization of data. As a result, according to this exemplary embodiment, servers can be switched to continue a service at lower cost than when active servers are supported by standby servers in a one-to-one correspondence, where resources required for the standby server do not depend on the number of active servers, without requiring a complicated operation such as dividing a communication path.

It is contemplated that when resources required for a standby server do not depend on the number of active servers, this independence contributes to procurement of the standby server at low cost, and to procurement of active servers at lower cost when commonality is provided between active servers and standby servers.

Referring again to Fig. 5, active server 11 comprises processor 14, storage device 15, and communication interface 16.

Processor 14 operates by executing a software program, and provides a service using data stored in storage device 15.

Processor 14 also synchronizes its own data to a subsequent server when it is providing a service using its own data. Also, if active server 11 exists antecedent to the server which contains processor 14, processor 14 stores data synchronized to preceding active server 11 in storage device 15.

Also, when preceding active server 11 fails, or preceding active server 11 starts a service in place of second preceding active server 11, processor 14 continues the service using data D1' synchronized to preceding active server 11.

Storage device 15 holds data required for a service of the associated server. Also, when active server 11 exists antecedent to the associated server, storage device 15 also holds synchronized data D1' from the preceding server.

Communication interface 16 is connected to communication path 13 to establish communications between servers. Between servers, synchronization data is transferred between active servers or between an active server and a standby server.

Standby server 12 comprises processor 17, storage device 18, and communication interface 19.

Processor 17 operates by executing a software program, and continues a service using data D1₂' synchronized to active server 11₂, stored in storage device 18, when preceding active server 11₂ fails or when active server 11₂ starts a service in place of active server 11₁ second antecedent thereto.

Storage device 18 holds data D21' synchronized with preceding active server 11₂.

Communication interface 19 is connected to communication path 13 to make communications with preceding active server 112. In the communications, communication interface 19 transfers synchronization data between active server 112 and standby server 12.

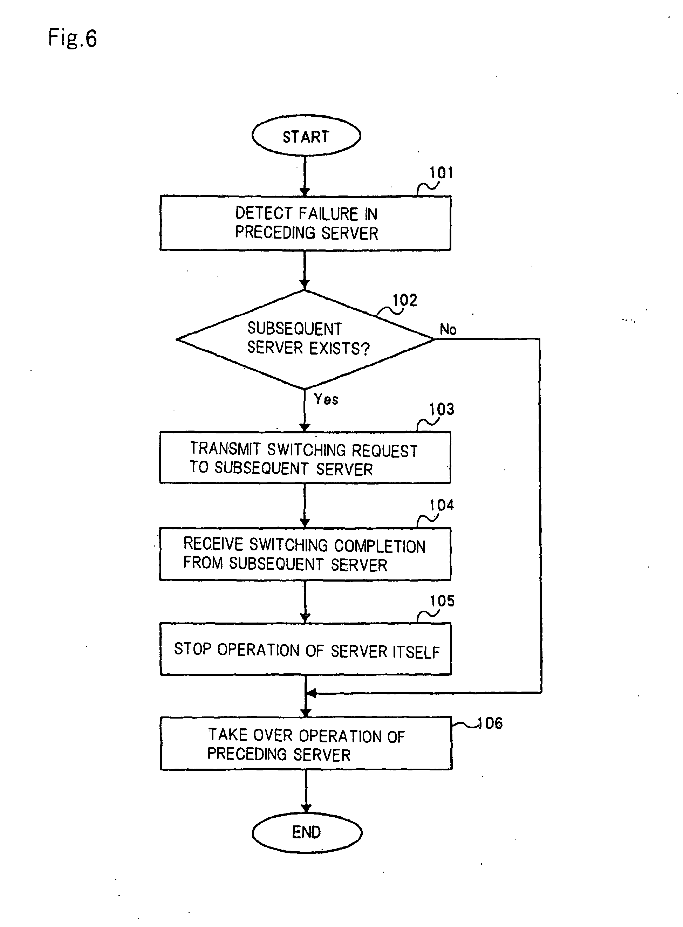

Fig. 6 is a flow chart showing the operation of the server when the preceding active server fails in the server of the first exemplary embodiment. Here, as an example, the operation is made common to active server 11 and standby server 12.

Referring to Fig. 6, the server detects a failure in active server 11, and starts an inter-server switching sequence (step 101). The inter-server switching sequence is a processing sequence for switching a service between a plurality of servers which provide redundancy. The server determines whether or not there is active server 11 or a standby server subsequent thereto (step 102). This is processing to determine whether the server itself is active server 11 or standby server 12. When the operation is not made common to active server 11 and standby server 12, this processing is not required. When a server is found subsequent thereto, this means that the server itself is an active server, whereas when there is no server subsequent thereto, this means that the server itself is a standby server.

When there is a subsequent server, the server transmits an inter-server switching request to the subsequent server (step 103). The inter-server switching request is a message for requesting the subsequent server to start the inter-server switching sequence. Afterwards, upon receipt of an inter-server switching completion message from the subsequent server (step 104), the server stops its operation (step 105). The inter-server switching completion is a message for notifying that the inter-server switching sequence is completed. Then, the server takes over a service so far provided by the preceding server using data synchronized with the preceding server (step 106).

On the other hand, when there is no subsequent server, as determined at step 102, the server proceeds to an operation at step 106, where the server takes over the service so far provided by the preceding server.

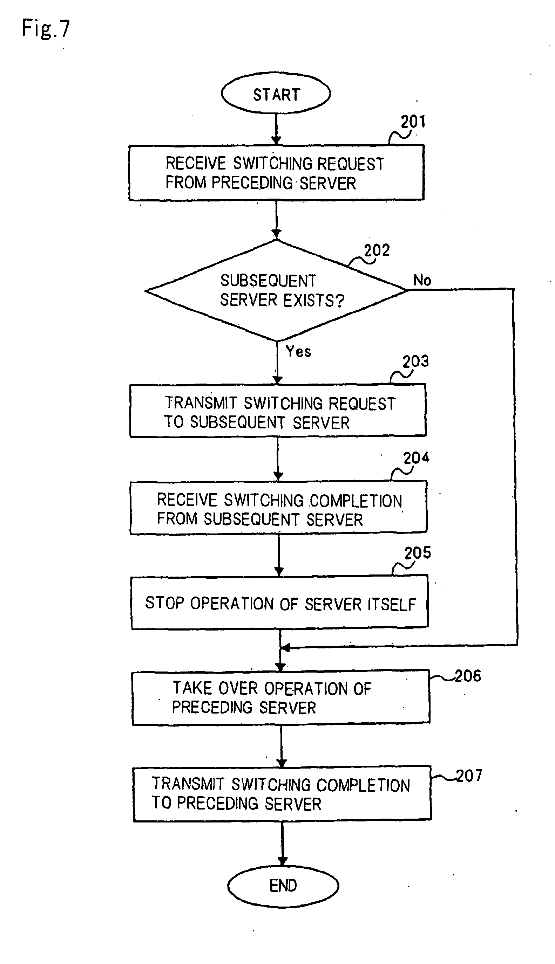

Fig. 7 is a flow chart showing the operation of the server which has received an inter-server switching request from the preceding active server in the server of the first exemplary embodiment. Here, as an example, the operation is made common to active server 11 and standby server 12.

Referring to Fig. 7, the server receives an inter-server switching request from the preceding server, and starts the inter-server switching sequence (step 201). The inter-server switching sequence shown at steps 202 - 206 is the same as that shown in Fig. 6 at steps 102 - 106. When the server completes the processing at steps 202 - 206, the server transmits an inter-server switching completion message to the preceding server, and terminates the processing.

Next, a description will be given of the operation of an entire node when active server 11 fails. Here, a description will be given of the operation of the node when active server 11₁ fails from a normal operation state where active server 11₁ and active server 11₂ are providing services. When active server 11₁ fails, the servers are switched such that active server 112 and standby server 12 provide services, thus allowing the node to resume the operation.

When active server 111 fails, active server 112 detects this failure, and starts an inter-server switching sequence. Active server 11₂ recognizes that active server 11₂ itself is not a standby server, and requests the subsequent server (standby server 12) which will take over a service of active server 11₂ for an inter-server switching.

Upon receipt of an inter-server switching request, standby server 12 starts the service so far provided by active server 11₂ using data D1₂' synchronized with preceding active server 11₂. Then, standby server 12 notifies preceding active server 11₂ of an inter-server switching completion.

Upon receipt of the inter-server switching completion from standby server 12, active server 11₂ stops the service so far provided thereby. Next, active server 11₂ starts a service so far provided by active server 11₁ using data D1₁' synchronized with preceding active server 11₁.

Notably, the amount of data of the inter-server switching request and inter-server switching completion, transmitted/received between servers, is sufficiently small as compared with the amount of data of the synchronization data which is transferred for synchronizing data for use in a service. As such, communication between servers takes a short time, and the inter-server switching is immediately completed. Thus, when active server 11₁ fails, the service can be continued as the entire node.

Also, while this exemplary embodiment is described on the assumption that the subsequent server detects a failure in the preceding server, the present invention is not so limited, but failures may be monitored in whichever configuration or method.

### (Second Exemplary Embodiment)

In the first exemplary embodiment, one standby server is assigned to one group of active servers connected in cascade. The present invention, however, is not so limited. A second exemplary embodiment illustrates a configuration which assigns one standby server to two groups of active servers connected in cascade.

An active server functions as a backup for one of the remaining active servers, and therefore comprises a storage capacity for storing data for two active servers, including its own data. When servers that have the same performance are used for both active server and standby server, the standby server also comprises a storage capacity for storing data for two active servers.

Accordingly, in this exemplary embodiment, a plurality of active servers are divided into two groups, data is synchronized through cascade connection in each group, and one standby server is shared at the last stage of the two groups. In this way, when any active server fails, the inter-server switching can be limited only to a group to which the active server belongs.

Also, as a result, it is possible to reduce messages transmitted/received between servers in concomitance with the inter-server switching. When N active servers are all connected in cascade in one group, communications will be made between servers N times at maximum. Alternatively, when N active servers are divided into two groups each including (N/2) active servers, communications can be reduced to (N/2) times at maximum. As a result, the amount of time taken for inter-server switching is also reduced as an entire node.

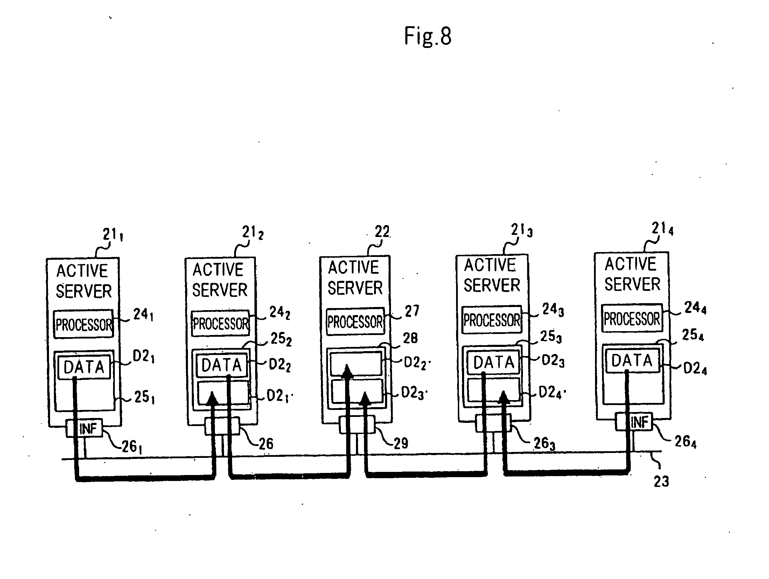

Fig. 8 is a block diagram showing the configuration of a node in the second exemplary embodiment. The node of this exemplary embodiment comprises active servers 21₁ - 21₄, and standby server 22. Active servers 21₁ - 21₄ and standby server 22 are connected to communication path 23.

Active servers 21₁ - 21₄ are divided into two groups, i.e., a group including active servers 21₁, 21₂ and a group including active servers 21₄, 21₃, in which data is synchronized through cascade connection.

During a normal operation, active servers 21₁ - 21₄ provide services using their own data D2₁ - D2₄, and synchronize their own data D2₁ - D2₄ to servers subsequent thereto in the cascade connection.

When any server fails, a server subsequent to that active server continues a service using data synchronized with the failed active server. In this event, a second subsequent server continues a service which has been so far provided by the active server which will take over the service using the data synchronized with the preceding active server.

Standby server 22 continues a service using data D2' synchronized with preceding active server 21 when a failure occurs in preceding active server 21 which belongs to any of the two groups, or when preceding active server 21 starts a service in place of second preceding active server 21.

In this exemplary embodiment, when active server 21 fails, inter-server switching is closed to the group which includes failed active server 21.

In the example of Fig. 8, when active server 21₁ fails, active server 21₂ continues a service using data D2₁' synchronized with active server 21₁. Then, a service previously provided by active server 21₂ is continued by standby server 22.

On the other hand, when active server 21₄ fails, active server 21₃ continues a service using data D24' synchronized with active server 21₄. Then, a service previously provided by active server 21₃ is continued by standby server 22.

Referring again to Fig. 8, active server 21 comprises processor 24, storage device 25, and communication interface 26. Processor 24, storage device 25, and communication interface 26 are similar in configuration and operation to processor 14, storage device 15, and communication interface 16 of active server 11 according to the first exemplary embodiment shown in Fig. 5.

Standby server 22 comprises processor 27, storage device 28, and communication interface 29. Standby server 22 differs from standby server 12 according to the first exemplary embodiment shown in Fig. 5 in that it is shared by active servers in the two groups. However, standby server 22 operates in a manner similar to standby server 12 in the first exemplary embodiment for each of the groups. Also, processor 27, storage device 28, and communication interface 29 operate for each of the groups in a similar manner to processor 17, storage device 18, and communication interface 19 according to the first exemplary embodiment.

Next, a description will be given of the operation of the entire node when active server 21₁ fails. Here, a description will be given of the operation of the node when active server 211 fails from a normal operation state where active servers 21₁ - 21₄ provide services. When active server 21₁ fails, the servers are switched such that active server 21₂ a nd standby server 22 provide services, thus allowing the node to resume the operation.

When active server 21₁ fails, active server 21₂ detects the failure and starts an inter-server switching sequence. Active server 21₂ confirms that it is not a standby server, and requests inter-server switching to a subsequent server (standby server 22) which will continue a service of active server 21₂ itself.

Upon receipt of an inter-server switching request, standby server 22 starts a service so far provided by active server 21₂ using data D2₂' synchronized with preceding active server 21₂. Then, standby server 22 notifies active server 21₂ of an inter-server switching completion.

Upon receipt of the inter-server switching completion from standby server 22, active server 21₂ stops the service so far provided thereby. Next, active server 21₂ starts a service so far provided by active server 21₁ using data D2₁' synchronized with preceding active server 21₁.

Notably, the amount of data of the inter-server switching request and inter-server switching completion message, transmitted/received between servers, is sufficiently small as compared with the amount of data of the synchronization data transferred for synchronizing data for use in a service. As such, a communication between servers takes a short time, and the inter-server switching is immediately completed. Thus, when active server 21₁ fails, the service can be continued as the entire node.

Also, while the configuration illustrated herein comprises one standby server for two groups of active servers, the configuration can alternatively comprise one standby server for three or more groups.

### (Third Exemplary Embodiment)

In the first and second exemplary embodiments, each active server belongs to one of the groups, and a plurality of active servers synchronize their data only in one direction. However, the present invention is not so limited. A third exemplary embodiment illustrates a configuration which comprises a plurality of active servers that are connected in cascade such that their data are synchronized in two directions.

In this example, the first active server in one direction is regarded as the last active server in the other direction. A plurality of active servers are connected in a line such that adjoining active servers bidirectionally synchronize data with each other. Further, two active servers at both ends also synchronize their data with a standby server.

Regarding a cascade connection in a different direction as a different group, the active servers respectively belong to two groups. As such, when an active server fails, an appropriate one can be selected from the two groups to perform the switching.

According to this configuration, when any active server fails, the inter-server switching can be limited only to one of the two directions. Also, when any active server fails, a selection can be made depending on the failed active server to a group which includes a smaller number of servers that have to switch services. As a result, inter-server switching can entail a reduced number of messages transmitted/received between the servers. When N active servers are all connected in cascade in one group, communications will be made between servers N times at maximum. Alternatively, when N active servers are divided into two groups each including (N/2) active servers, and are bidirectionally connected in cascade to provide four groups in total, communications can be reduced to (N/4) times at maximum. As a result, the amount of time taken for inter-server switching is also reduced as an entire node.

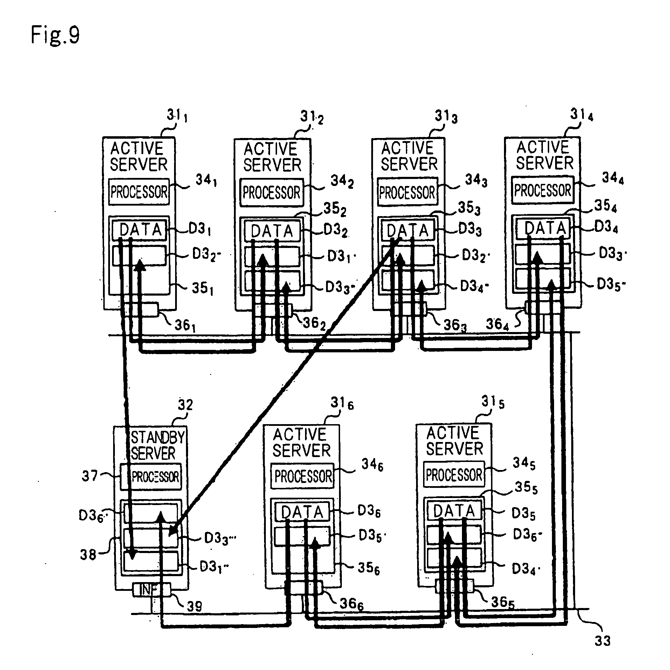

Fig. 9 is a block diagram showing the configuration of the node in the third exemplary embodiment. The node of this exemplary embodiment comprises active servers 31₁ - 316 and standby server 32. Active servers 31₁ - 31₆ and standby server 32 are connected to communication path 33.

Active servers 31₁ - 31₆ are divided into two, i.e., a set of active servers 31₁, 31₂, 31₃ and a set of active servers 31₃, 31₄, 31₅, 31₆, which respectively synchronize their data through a cascade connection.

A plurality of active servers 31 belonging to the same set are connected in a line such that adjoining access servers 31 bidirectionally synchronize data with each other, and two active servers 31 at both ends also synchronize their data with standby server 32.

For example, in the set of active servers 31₁, 31₂, 31₃, active server 31₁ and active server 312 bidirectionally synchronize data with each other. Also, active server 31₂ and active server 31₃ bidirectionally synchronize data with each other. Further, active server 31₁ and active server 31₃ located at both ends synchronize their data with standby server 32 as well. In this way, two groups of cascade connections are established through the set of active servers 31₁, 31₂, 31₃.

Here, active server 31₃ belongs to the two sets, and is positioned at the last stage of groups connected in cascade in each set, at which a connection is made to standby server 32. With this configuration, data of single active server 31₃ can be used for data of the two groups which should be synchronized to standby server 32.

Referring again to Fig. 9, active server 31 comprises processor 34, storage device 35, and communication interface 36. Processor 34, storage device 35, and communication interface 36 are similar in configuration and operation to processor 14, storage device 15, and communication interface 16 of active server 11 according to the first exemplary embodiment shown in Fig. 5. In this exemplary embodiment, however, single active server 31 belongs to a plurality of groups.

Therefore, when any one of active servers 31 fails, a determination is made that the inter-server switching will be performed in one of the groups, to which the failed active server 31 belongs. Processor 34 may comprise a function of selecting a group which is subjected to the inter-server switching when any active server 31 fails, in addition to functions similar to those of processor 14 of active server 11 according to the first exemplary embodiment shown in Fig. 5. For example, processor 34 may select a group which is subjected to the inter-server switching in accordance with the location of failed active server 31. More specifically, each server may be previously registered with information which maps failed active server 31 to a group which includes the least number of servers that entail the inter-server switching against the failure.

Standby server 32 comprises processor 37, storage device 38, and communication interface 39. Standby server 32 is shared by a plurality of groups as is the case with standby server 22 in the second exemplary embodiment shown in Fig. 8. Standby server 32 operates for each group in a manner similar to standby server 12 in the first exemplary embodiment. Also, processor 37, storage device 38, and communication interface 39 operate for each group in a manner similar to processor 17, storage device 18, and communication interface 19 according to the first exemplary embodiment.

Next, a description will be given of the operation of the entire node when active server 31₄ fails. Here, a description will be given of the operation of the node when active server 314 fails from a normal operation state where active servers 31₁ - 31₆ are providing services.

When active server 31₄ fails, active server 31₃ and active server 31₅ detect the failure. In a group which extends through active server 31₃, only one server (only active server 31₃) is passed through on the way to standby server 32. On the other hand, in a group which extends through active server 31₅, two servers (active servers 31₅, 31₆) are passed through on the way to standby server 32. Accordingly, the inter-server switching is performed in the group which extends through active server 31₃.

Active server 31₃ starts an inter-server switching sequence. Active server 31₃ confirms that it is not standby server 32, and requests inter-server switching to a subsequent server (standby server 32) which will continue a service of active server 31₃ itself.

Upon receipt of an inter-server switching request, standby server 32 starts a service so far provided by active server 31₃ using data D3₃"' synchronized with preceding active server 31₃. Also, standby server 32 notifies active server 31₃ of the completion of inter-server switching.

Upon receipt of an inter-server switching completion message from standby server 32, active server 31₃ stops the service so far provided thereby. Next, active server 31₃ starts a service so far provided by active server 31₄ using data D3₄" synchronized with preceding active server 31₄.

Notably, the amount of data of the inter-server switching request and the inter-server switching completion message, transmitted/received between servers, is sufficiently small as compared with the amount of data of the synchronization data transferred for synchronizing data for use in a service. As such, communication between servers takes a short time, and inter-server switching is immediately completed. Thus, when active server 31₄ fails, the service can be continued as the entire node.

While the present invention has been described with reference to some exemplary embodiments, the present invention is not limited to the exemplary embodiments. The present invention defined in claims can be modified in configuration and details in various manners which can be understood by those skilled in the art to be within the scope of the present invention.

This application claims the benefit of the priority based on Japanese Patent Application No. 2007-330060 filed December 21, 2007.

## Claims

1. A node system comprising:
a plurality of active servers (11₁, 11₂) connected in cascade such that data synchronized to data of a preceding server (11₁) is stored in a subsequent server (11₂); and
a standby server (12) that stores data synchronized to data of a last one (11₂) of the plurality of active servers (11₁, 11₂) in the cascade connection,
wherein, upon occurrence of a failure in any active server (11₁, 11₂), each server (11₂, 12) from a server (11₂) subsequent to said failed active server (11₁) through said standby server (12) takes over a service so far provided by said preceding server (11₁, 11₂) using data synchronized to a respective preceding server.

2. The node system according to claim 1, comprising a plurality of cascade connected groups each made up of said plurality of active servers (21₁, 21₂, 21₄, 21₃), wherein the same standby server (22) records data synchronized to data of last active servers (21₂, 21₃) in said plurality of groups.

3. The node system according to claim 2, wherein at least one active server (31₃) belongs to a plurality of cascade connected groups, and upon occurrence of a failure in said active server (31₃), switching is performed in a group which includes a smaller number of servers (31₁, 31₂, 31₃) that should switch services, among said plurality of groups to which said active server (31₃) belongs.

4. The node system according to claims 2 or 3, wherein a plurality of active servers (31₁, 31₂, 31₃) belonging to the same group are connected in a line such that adjoining active servers (31₁, 31₂; 31₂, 31₃) bidirectionally synchronize data with each other, and said standby server (32) stores data synchronized to data of two active servers (31₁, 31₃) at both ends of said group.

5. The node system according to any of claims 2 or 3, comprising an active server (31₃) that belongs to a plurality of cascade connected groups and that is located at the last stage in any of said plurality of groups, and said standby server (32) stores data synchronized to data of said active server (31₃) located at the last stage in said plurality of groups.

6. A server switching method, comprising:
storing data synchronized to data of a preceding active server (11₁) in a subsequent active server (11₂) such that a plurality of active servers (11₁, 11₂) are connected in cascade, and storing data synchronized to data of a last one (11₂) of said plurality of active servers (11₁, 11₂) in the cascade connection in a standby server (12),
wherein, upon occurrence of a failure in any active server (11₁, 11₂), each server (11₂, 12) from a server (11₂) subsequent to said failed active server (11₁) through said standby server (12) takes over a service so far provided by said preceding server (11₁, 11₂) using data synchronized to a respective preceding server.

## Patentansprüche

1. Knotensystem, das folgendes umfasst:
eine Anzahl aktiver Server (11₁, 11₂), die in Kaskade so geschaltet sind, dass Daten, die mit Daten eines vorhergehenden Servers (11₁) synchronisiert sind, in einem nachfolgendem Server (11₂) gespeichert sind; und
einen Standbyserver (12), der Daten speichert, die mit Daten von einem letzten Server (11₂) der Anzahl von aktiven Servern (11₁, 11₂) in der Kaskadenverbindung synchronisiert sind,
wobei, bei Auftreten eines Fehlers in irgendeinem aktiven Server (11₁, 11₂), jeder Server (11₂, 12) von einem Server (11₂), der dem ausgefallenen aktiven Server (11₁) nachfolgend ist, bis zu dem Standbyserver (12) einen Dienst übernimmt, der bisher durch den vorhergehenden Server (11₁, 11₂) vorgesehen wurde, unter Verwendung von Daten, die mit einem jeweiligen vorhergehenden Server synchronisiert sind.

2. Knotensystem gemäß Anspruch 1, das eine Anzahl von kaskadenverbundenen Gruppen umfasst, die jede aus der Anzahl von aktiven Servern (21₁, 21₂, 21₄, 21₃) aufgebaut sind, wobei derselbe Standbyserver (22) Daten aufzeichnet, die mit Daten von letzten aktiven Servern (21₂, 21₃) in der Anzahl von Gruppen synchronisiert sind.

3. Knotensystem gemäß Anspruch 2, wobei mindestens ein aktiver Server (31₃) zu einer Anzahl von kaskadenverbundenen Gruppen gehört und bei Auftreten eines Fehlers in dem aktiven Server (31₃) Umschalten in einer Gruppe ausgeführt wird, die eine kleinere Zahl von Servern (31₁, 31₂, 31₃) einschließt, die Dienste umschalten sollten, unter der Anzahl von Gruppen, zu denen der aktive Server (31₃) gehört.

4. Knotensystem gemäß Ansprüchen 2 oder 3, wobei eine Anzahl von aktiven Servern (31₁, 31₂, 31₃), die zu derselben Gruppe gehören, in einer Linie so verbunden sind, dass angrenzende aktive Server (31₁, 31₂; 31₂, 31₃) bidirektional Daten miteinander synchronisieren, und der Standbyserver (32) Daten speichert, die mit Daten von zwei aktiven Servern (31₁, 31₃) an beiden Enden der Gruppe synchronisiert sind.

5. Knotensystem gemäß einem der Ansprüche 2 oder 3, das einen aktiven Server (31₃) umfasst, der zu einer Anzahl von kaskadeverbundenen Gruppen gehört und der auf der letzten Stufe in irgendeiner der Anzahl von Gruppen angeordnet ist, und wobei der Standbyserver (32) Daten speichert, die mit Daten des aktiven Servers (31₃), der auf der letzten Stufe in der Anzahl von Gruppen angeordnet ist, synchronisiert sind.

6. Serverumschaltverfahren, das folgendes umfasst:
Speichern von Daten, die mit Daten eines vorhergehenden aktiven Servers (11₁) synchronisiert sind, in einem nachfolgenden aktiven Server (11₂), so dass eine Anzahl von aktiven Servern (11₁, 11₂) in Kaskade verbunden sind, und Speichern von Daten, die mit Daten von einem letzten Server (11₂) der Anzahl von aktiven Servern (11₁, 11₂) in der Kaskadenverbindung synchronisiert sind, in einem Standbyserver (12),
wobei, bei Auftreten eines Fehlers in irgendeinem aktiven Server (11₁, 11₂), jeder Server (11₂, 12) von einem Server (11₂), der dem ausgefallenen aktiven Server (11₁) nachfolgend ist, bis zu dem Standbyserver (12) einen Dienst übernimmt, der bisher durch den vorhergehenden Server (11₁, 11₂) vorgesehen wurde, unter Verwendung von Daten, die mit einem jeweiligen vorhergehenden Server synchronisiert sind.

## Revendications

1. Système de noeuds comprenant :
une pluralité de serveurs actifs (11₁, 11₂) connectés en cascade de sorte que des données synchronisées avec des données d'un serveur précédent (11₁) sont stockées sur un serveur suivant (11₂) ; et
un serveur de secours (12) qui stocke des données synchronisées avec des données du dernier (11₁) de la pluralité de serveurs actifs (11₁, 11₂) dans la connexion en cascade,
dans lequel, en cas de survenue d'une panne d'un serveur actif quelconque (11₁, 11₂), chaque serveur (11₁, 12), d'un serveur (11₂) qui suit ledit serveur actif en panne (11₁) jusqu'audit serveur de secours (12), prend en charge un service jusque-là fourni par ledit serveur précédent (11₁, 11₂) en utilisant les données synchronisées par rapport au serveur précédent respectif.

2. Système de noeuds selon la revendication 1, comprenant une pluralité de groupes connectés en cascade composés chacun de ladite pluralité de serveurs actifs (21₁, 21₂, 21₄, 21₃) , dans lequel le même serveur de secours (22) enregistre des données synchronisées avec des données des derniers serveurs actifs (21₁, 21₃) de ladite pluralité de groupes.

3. Système de noeuds selon la revendication 2, dans lequel au moins un serveur actif (31₃) appartient à une pluralité de groupes connectés en cascade, et en cas de survenue d'une panne dudit serveur actif (31₃), une commutation est effectuée dans un groupe qui comprend un plus petit nombre de serveurs (31₁, 31₂, 31₃) devant commuter leurs services, parmi ladite pluralité de groupes à laquelle appartient ledit serveur actif (31₃).

4. Système de noeuds selon la revendication 2 ou 3, dans lequel une pluralité de serveurs actifs (31₁, 31₂, 31₃) appartenant au même groupe sont connectés en file de sorte que les serveurs actifs contigus (31₁, 31₂ ; 31₂, 31₃) synchronisent leurs données de manière bidirectionnelle entre eux, et ledit serveur de secours (32) stocke des données synchronisées avec les données de deux serveurs actifs (31₁, 31₃) aux deux extrémités dudit groupe.

5. Système de noeuds selon l'une quelconque des revendications 2 ou 3, comprenant un serveur actif (31₃) qui appartient à une pluralité de groupes connectés en cascade et qui se situe au dernier rang de l'un quelconque de ladite pluralité de groupes, et ledit serveur de secours (32) stocke des données synchronisées avec des données dudit serveur actif (31₃) situé au dernier rang de ladite pluralité de groupes.

6. Procédé de commutation de serveurs, comprenant :
le stockage de données synchronisées avec des données d'un serveur actif précédent (11₁) sur un serveur suivant (11₂) de sorte qu'une pluralité de serveurs actifs (11₁, 11₂) sont connectés en cascade, et le stockage de données synchronisées avec des données du dernier (11₂) de ladite pluralité de serveurs actifs (11₁, 11₂) de la connexion en cascade sur un serveur de secours (12),
dans lequel, en cas de survenue d'une panne d'un serveur actif quelconque (11₁, 11₂), chaque serveur (11₁, 12), du serveur (11₂) qui suit ledit serveur actif en panne (11₁) jusqu'audit serveur de secours (12), prend en charge un service jusque-là fourni par ledit serveur précédent (11₁, 11₂) en utilisant les données synchronisées par rapport au serveur précédent respectif.
